# EUROPEAN PATENT APPLICATION

(11) **EP 3 093 744 A1**
(43) Date of publication of application: **16.11.2016**
(21) Application number: 16169201.7
(22) Date of filing: 11.05.2016
(51) Int. Cl.: G06F 3/048, G06F 3/0488

(54) **INFORMATION PROCESSING DEVICE, INFORMATION PROCESSING PROGRAM, AND INFORMATION PROCESSING METHOD**

(30) Priority: 12.05.2015 JP 2015097498
(71) Applicant: Konica Minolta, Inc., Tokyo 100-7015 (JP)
(72) Inventor: Takamura, Shunsuke, Tokyo, 100-7015 (JP); Ogino, Shinya, Tokyo, 100-7015 (JP); Takeuchi, Kazuma, Tokyo, 100-7015 (JP); Hosaka, Kenta, Tokyo, 100-7015 (JP); Fukumura, Yuri, Tokyo, 100-7015 (JP)
(74) Representative: Henkel, Breuer & Partner

(57) **Abstract**

An information processing device includes: an operation receiver capable of receiving a plurality of gesture operations; a threshold value setting section configured to set a threshold value of a determination index for determining whether the gesture operation is valid for each of the gesture operations; a gesture analysis section calculates a measured value of the determination index of a gesture operation received by the operation receiver and compares the measured value with the threshold value to determine whether the gesture operation is valid; and a display control section configured to reflect the gesture operation determined to be valid on the screen, wherein the threshold value setting section variably sets a threshold value corresponding to a gesture operation other than the gesture operation determined to be valid in accordance with an execution state of the gesture operation received by the operation receiver.

## Description

### BACKGROUND OF THE INVENTION

### 1. Field of the Invention

The present invention relates to an information processing device, an information processing program, and an information processing method which allow for information input using a gesture operation.

### 2. Description of Related Art

In recent years, information processing devices provided with a touch panel, in which information can be input by directly touching the screen with a contact member such as fingers and a stylus as with smartphones, tablet terminals, or electronic whiteboards have been practically used. When a predetermined gesture operation is performed on the touch panel of the above-mentioned information processing devices, a process assigned to the gesture operation (for example, movement of an object and the like) is executed. While an exemplary case where a touch panel is used as an input device is described below, information input using gesture operations is also performed using input devices called touch pad.

A gesture operation of touching one point on the touch panel is called single touch gesture, and a gesture operation of simultaneously touching two or more points on the touch panel is called multiple touch gesture. In recent years, the progresses of the multiple touch gesture technology have made it possible to perform diversified and complicated operations.

Examples of the gesture operation include dragging (moving), pinch-out, pinch-in, and rotating. The dragging is an operation of moving an object by touching and sliding one or more points (in the case of the multiple touch gesture, sliding without changing the distance between the touch points). The pinch-out is an operation of enlarging an object by touching and sliding two points on the object in such a manner as to move the touch points away from each other. The pinch-in is an operation of reducing the size of an object by touching and sliding two points on the object in such a manner as to bring the touch points close to each other. The rotating is an operation of rotating an object in a desired direction by touching two points on the object and sliding one or both of the touch points in such a manner as to draw a circular arc. In the following description, pinch-out and pinch-in may be referred also to as "resizing."

In general, discrimination of the gesture operation is performed based on the change of the coordinate of the touch point. For example, when two touch points move along a straight line, the operation is determined to be "dragging." When two touch points are brought close to each other, the operation is determined to be "pinch-in," whereas when two touch points are moved away from each other, the operation is determined to be "pinch-out." In addition, when two touch points are rotated, the operation is determined to be "rotating."

For example, in PTL 1 (Japanese Patent Application Laid-Open No. 2013-178636), a determination index is provided for each of the gesture operations (here, dragging, resizing, and rotating), and a measured value of the determination index of and a predetermined threshold value are compared with each other to determine whether the gesture operation is valid. A valid gesture operation is an operation which should be reflected on the screen.

Examples of the determination index include the operation speed and the operation amount. The operation speed in the case of dragging is the sliding speed, the operation speed in the case of resizing is the change of the distance between two touch points (hereinafter referred to as "point distance change speed"), and the operation speed in the case of rotating is the rotating speed. In PTL 1, the operation amount is used as the determination index. The operation amount in the case of dragging is the sliding amount, the operation amount in the case of resizing is the change of the distance between two touch points, and the operation amount in the case of rotating is the rotating amount. Dragging is determined to be valid when the measured values of the sliding speed and the sliding amount are greater than a threshold value. Resizing is determined to be valid when the measured values of the point distance change speed and the point distance change amount are greater than a threshold value. Rotating is determined to be valid when the measured values of the rotating speed and the rotating amount are greater than a threshold value. The gesture operation determined to be valid is reflected on the screen in accordance with the operation amount. It is to be noted that when the measured values of a plurality of determination indices are greater than the threshold values, a plurality of gesture operations (for example, dragging and resizing) are simultaneously reflected on the screen.

However, in the multiple touch gesture, a plurality of points are touched, and consequently an unintended gesture operation may be executed due to an error of another gesture operation and the like during the gesture operation. For example, pinch-in may become valid when two touch points are brought close to each other during dragging of an object with two fingers, thus resulting in unintended size reduction of the object. In particular, dragging, resizing, and rotating are easily influenced by one another, and therefore the gesture operation has to be performed so as to not cause unintended operations. Even in the case of a single touch gesture, when the screen is scrolled by sliding, the sliding direction may be shifted and consequently scrolling in an unintended direction may be executed, for example.

As disclosed in PTL 1, in the case where whether the gesture operation is valid is determined by comparing the threshold value with the measured value of the operation amount as the determination index, the above-described wrong operation can be suppressed by setting a large threshold value. However, when the threshold value is set to a large value, the operation amount is required to be increased to a certain degree in order to reflect the gesture operation on the screen, and consequently, operability is sacrificed and fine adjustment of the object becomes difficult.

### SUMMARY OF THE INVENTION

An object of the present invention is to provide an information processing device which can improve the operability at the time of information input using a gesture operation, an information processing program, and an information processing method.

To achieve the abovementioned object, an information processing device reflecting one aspect of the present invention includes: an operation receiver capable of receiving a plurality of gesture operations and generating an output according to each of the gesture operations; a threshold value setting section configured to set a threshold value of a determination index for determining whether the gesture operation is valid for each of the gesture operations; a gesture analysis section configured to provide a measured value of the determination index of a gesture operation received by the operation receiver and compares the measured value with the threshold value to determine whether the gesture operation is valid; and a display control section configured to reflect the valid gesture operation on the screen, wherein the threshold value setting section variably sets a threshold value corresponding to a gesture operation other than the valid gesture operation in accordance with an execution state of the gesture operation received by the operation receiver.

A information processing program reflecting another aspect of the present invention causes a computer of an information processing device including an operation receiver capable of receiving a plurality of gesture operations and generating an output according to each of the gesture operations to execute: setting a threshold value of a determination index for determining whether the gesture operation is valid for each of the gesture operations; providing a measured value of the determination index of a gesture operation received by the operation receiver and comparing the measured value with the threshold value to determine whether the gesture operation is valid; reflecting the valid gesture operation on a screen; and variably setting a threshold value corresponding to a gesture operation other than the valid gesture operation in accordance with an execution state of the gesture operation received by the operation receiver.

An information processing method reflecting another aspect of the present invention and used in an information processing device including an operation receiver capable of receiving a plurality of gesture operations and generating an output according to each of the gesture operations includes: setting a threshold value of a determination index for determining whether the gesture operation is valid for each of the gesture operations; providing a measured value of the determination index of a gesture operation received by the operation receiver and comparing the measured value with the threshold value to determine whether the gesture operation is valid; reflecting the valid gesture operation on a screen; and variably setting a threshold value corresponding to a gesture operation other than the valid gesture operation in accordance with an execution state of the gesture operation received by the operation receiver.

### BRIEF DESCRIPTION OF DRAWINGS

The present invention will become more fully understood from the detailed description given hereinbelow and the appended drawings which are given by way of illustration only, and thus are not intended as a definition of the limits of the present invention, and wherein:
FIG. 1 is a schematic view of an electronic whiteboard according to an embodiment of the present invention;
FIG. 2 is a block diagram illustrating a hardware configuration of the electronic whiteboard;
FIG. 3 is a functional block diagram illustrating a function of a control section of the electronic whiteboard;
FIG. 4A and FIG. 4B illustrate a threshold value of a determination index which is set in accordance with an execution state of a gesture operation; and
FIG. 5 is a flowchart of an exemplary gesture analysis process.

### DESCRIPTION OF THE PREFERRED EMBODIMENTS

In the following, an embodiment of the present invention is described in detail with reference to the accompanying drawings.

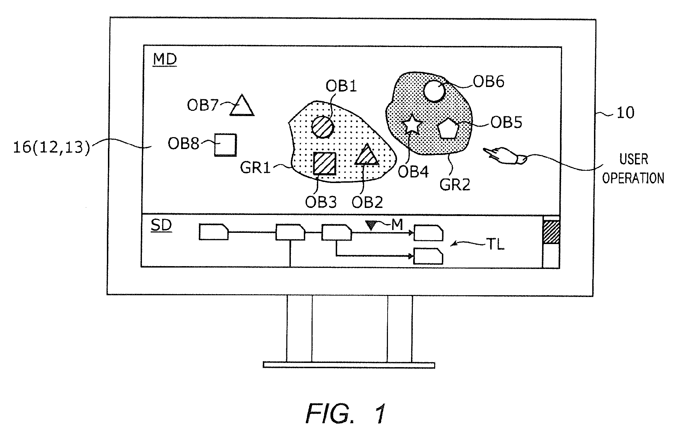

FIG. 1 is a schematic view of electronic whiteboard 10, which serves as an information processing device according to an embodiment of the present invention. Electronic whiteboard 10 is used as a conference support apparatus that stores screen transition based on a user operation, and manages the flow of the conference in a time-series manner, for example. Specifically, when a user adds objects of elements of the proceedings to the display region of display section 13 or operates displayed objects from operation receiver 12 of electronic whiteboard 10 in a conference, information relating to the screen (hereinafter referred to as "screen information") at this time is stored.

Here, the object is data to be operated, and is displayed on display section 13 in the form of a text box in which letters or marks are input, a diagram, a photographic image, a work area (window) of an application, or the like. In the present embodiment, the object is displayed in the form of a simple diagram. In addition, operations of changing the state of objects such as adding (newly creating), moving, resizing (expanding and reducing), rotating, editing, deleting, grouping, ungrouping and the like of objects are referred to as "object operation."

In FIG. 1, display section 13 of electronic whiteboard 10 is sectioned into main screen MD on which objects are displayed, and sub-screen SD on which a tree structure diagram (hereinafter referred to as "time line") capable of visually presenting the flow of the conference is displayed. Main screen MD is individual work area of electronic whiteboard 10. It is possible to adopt a configuration in which main screen MD is normally displayed while the sub-screen is displayed as necessary, or a configuration in which switching between main screen MD and sub-screen SD is performed and sub-screen SD is displayed on the entire display region.

In FIG. 1, eight objects, OB1 to OB8, are created on main screen MD, and objects OB1 to OB3, and objects OB4 to OB6 are grouped into respective groups (GR1 and GR2). Time line TL of a case where the discussion is branched at a certain time point is displayed on sub-screen SD. When the discussion is branched in the course of the discussion, multiple conclusions are obtained.

The user performs an object operation on main screen MD, and a time line operation on sub-screen SD. The time line operation refers to an operation that is performed utilizing time line TL, and includes an operation of moving marker M, and a branching operation of branching a discussion. For example, the user can reproduce a screen at an arbitrary time point on main screen MD by moving marker M on time line TL. Of the object operations, moving, resizing, and rotating of the object are performed by a gesture operation (which includes a single touch gesture and a multiple touch gesture).

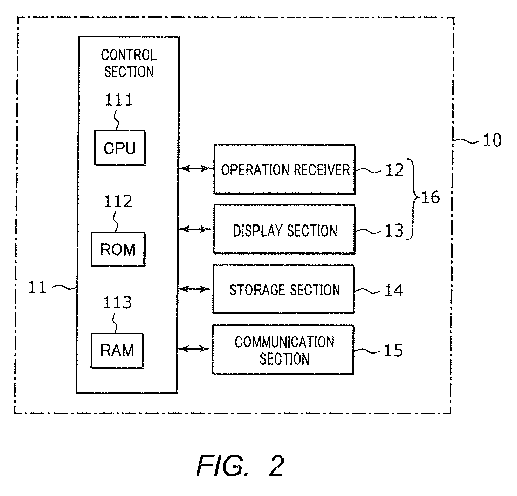

FIG. 2 illustrates an exemplary hardware configuration of electronic whiteboard 10. As illustrated in FIG. 2, electronic whiteboard 10 includes control section 11, operation receiver 12, display section 13, storage section 14, communication section 15 and the like. The blocks are electrically connected through a bus line. When an information processing program described later is executed by control section 11, an information processing method of the present embodiment is achieved.

Control section 11 includes central processing unit (CPU) 111 serving as a computing/controlling apparatus, random access memory (RAM) 113 and read only memory (ROM) 112 serving as a main storage apparatus. ROM 112 stores basic setting data and a basic program called basic input output system (BIOS). CPU 111 reads out a program suited to processing details from ROM 112 or storage section 14, develops the program in RAM 113, and controls each block in cooperation with the developed program.

Operation receiver 12 and display section 13 are composed of a flat panel display provided with a touch panel, for example. Various kinds of conventionally known devices such as liquid crystal displays, organic EL displays, and electronic paper displays having a memory performance may be adopted as the flat panel display. In the following description, a component having a function of operation receiver 12 and a function of display section 13 as the flat panel display is referred to as "operation display section 16." It is to be noted that operation receiver 12 and display section 13 may be separate members.

Operation receiver 12 receives handwriting input, an object operation, and a time line operation of the user, and outputs a signal corresponding to the received operation (for example, a signal indicating the coordinate of the touch point) to control section 11. While it is assumed in the following description that the user performs operations using his or her fingers, operations may be performed with use of body parts other than fingers, or contact members such as a stylus.

In accordance with the display control information input from control section 11, display section 13 displays various kinds of information on main screen MD and sub-screen SD. When operation receiver 12 receives a gesture operation, the operation assigned to the gesture operation is reflected on the screen of display section 13. Discrimination of the gesture operation (which includes validity/invalidity) is performed by control section 11.

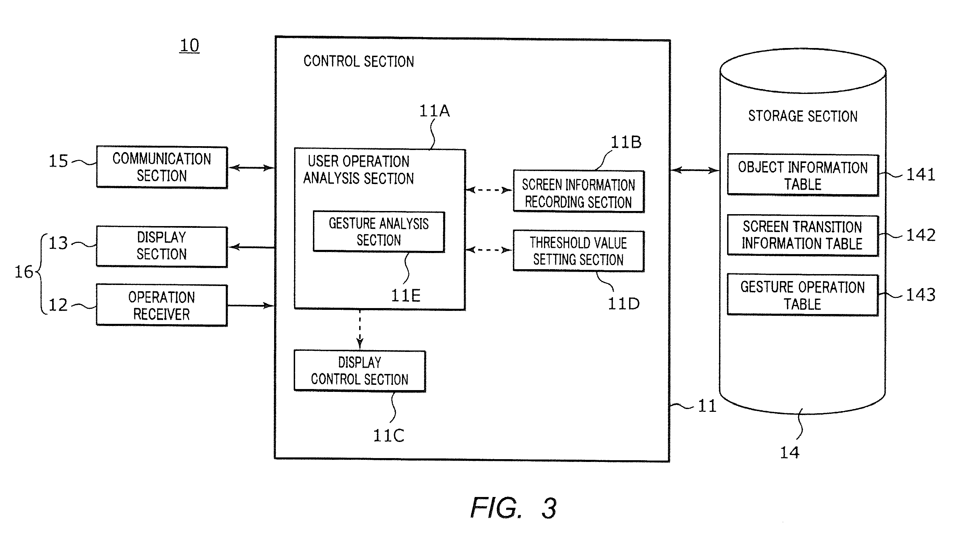

Storage section 14 is, for example, an auxiliary storage apparatus such as a hard disk drive (HDD), a solid state drive (SSD), and a secure digital (SD) card, and stores an information processing program, information relating to screens, and the like. Storage section 14 includes object information table 141, screen transition information table 142, gesture operation table 143 and the like (see FIG. 3).

Communication section 15 is, for example, a communication interface such as a network interface card (NIC), a modulator-demodulator (MODEM), and a universal serial bus (USB). Control section 11 transmits and receives various kinds of information to and from a terminal apparatus (not illustrated) connected to a network such as a cable LAN and a wireless LAN through communication section 15. Communication section 15 may be composed of a communication interface for near field wireless communications such as near field communication (NFC), Bluetooth (registered trademark) and the like.

FIG. 3 is a functional block diagram illustrating a function of control section 11 of electronic whiteboard 10. As illustrated in FIG. 3, control section 11 functions as user operation analysis section 11A, screen information recording section 11B, display control section 11C, and threshold value setting section 11D. A part or all of these functional parts may be configured by a dedicated hardware.

User operation analysis section 11A analyzes the operation information input from operation receiver 12 and specifies the operation performed by the user. Screen information recording section 11B and display control section 11C execute a predetermined process (for example, an object is enlarged by pinch-out or the like) which is preliminarily set in association of the details of the operation on the basis of the user operation specified by user operation analysis section 11A.

User operation analysis section 11A includes gesture analysis section 11E that analyzes the gesture operation performed by the user. When a touch by the user on operation receiver 12 is detected, gesture analysis section 11E determines whether the gesture operation is valid. To be more specific, gesture analysis section 11E calculates and provides the measured value of the determination index which is set for each gesture operation (here, dragging, resizing, and rotating) on the basis of change of the coordinate of the touch point, and compares the measured value with a predetermined threshold value to determine whether the gesture operation is valid.

Here, the sliding speed is used as the determination index of dragging, the point distance change speed is used as the determination index of resizing, and the rotating speed is used as the determination index of rotating. When the operation speed is used as the determination index of the object operation, an operation having a large operation amount and a low operation speed is not used for determination as long as the user consciously starts an intended object operation at a speed equal to or greater than a threshold value. Accordingly, unintended movement, deformation, rotation and the like of the object due to a wrong operation of the user are easily suppressed in an effective manner.

The dragging is determined to be valid when measured value Mₘ of the sliding speed is greater than threshold value Mth. The resizing is determined to be valid when measured value Dₘ of the point distance change speed is greater than threshold value Dₜₕ. The rotating is determined to be valid when measured value θₘ of the rotating speed is greater than threshold value θₜₕ. Therefore, the smaller the threshold value of the operation speed, the greater the possibility that the gesture operation is determined to be valid, and the greater the threshold value of the operation speed, the smaller the possibility that the gesture operation is determined to be valid.

Screen information recording section 11B records the flow of a conference (screen transition) based on an object operation performed by the user in storage section 14 as screen information. The screen information is information representing elements of a screen and times when the elements are created and changed. The screen information includes object information for individually managing operations on objects or groups, and screen transition information for managing the flow of a conference in a time-series manner. The object information is stored in object information table 141 of storage section 14, and the screen transition information is stored in screen transition information table 142 of storage section 14.

Display control section 11C generates display control information (screen data) for displaying a screen based on a user operation on display section 13, and controls display section 13 to display the screen based on the screen data. When generating the display control information, display control section 11C acquires required information from storage section 14. The display control information includes screen display control information for displaying a screen reflecting the object operation. When a gesture operation is determined to be valid by gesture analysis section 11E, display control section 11C refers to gesture operation table 143, and reflects a process assigned to the gesture operation on the screen of display section 13.

At this time, when the operation performed before the gesture operation is determined to be valid is ignored (or does not reflected on the screen), the user may become dissatisfied or distrustful because of poor reaction. In view of this, preferably, display control section 11C reflects on the screen the operation in a period from the start of the gesture operation (detection of the touch on operation receiver 12) until the gesture operation is determined to be valid. With this configuration, the gesture operation intended by the user is smoothly reflected on the screen. By storing the coordinate information in RAM 113 every time when the touch point is changed, it is also possible to reflect the gesture operation on the screen afterward.

Threshold value setting section 11D sets the threshold value which is referred to by gesture analysis section 11 E at the time of determination of the validity/invalidity of the gesture operation in accordance with the execution state of the gesture operation. Table 1 is an exemplary setting table which is referred to at the time of setting the threshold value of the determination index of a multiple touch gesture.

As shown in Table 1, threshold value setting section 11D is configured such that the threshold values of the gesture operations of dragging, resizing, and rotating can be variably set. When all of the gesture operations are invalid, the threshold values of the determination indices of all of the gesture operations are set to the first threshold value. The first threshold value is set to a value at which the gesture operation is determined to be valid even when the user does not intentionally increase the operation speed.

In addition, when a gesture operation is determined to be valid, threshold value setting section 11 D sets the threshold value of the determination index of the valid gesture operation to the first threshold value, and sets the threshold value of the determination index of the other gesture operations to the second threshold value. When the second threshold value is excessively large, the gesture operation intended by the user is difficult to be executed, and therefore it suffices that the second threshold value is a value at which the fact that the user is intentionally increasing the operation speed can be determined.

**[Table 1]**

| | | Valid gesture operation | | | | | | | |
|---|---|---|---|---|---|---|---|---|---|
| | | None | J3 | J2 | J2 J3 | J1 | J1 J3 | J1 J2 | J1 J2 J3 |
| Threshold value | Mₜₕ | M1 | M2 | M2 | M2 | M1 | M1 | M1 | M1 |
| | Dₜₕ | D1 | D2 | D1 | D1 | D2 | D2 | D1 | D1 |
| | θₜₕ | θ1 | θ1 | θ2 | θ1 | θ2 | θ1 | θ2 | θ1 |

| | | | | | | | | | |
|---|---|---|---|---|---|---|---|---|---|
| J1: dragging, J2: resizing, J3: rotating M1, D1, θ1: first threshold value M2, D2, θ2: second threshold value (>first threshold value) | | | | | | | | | |

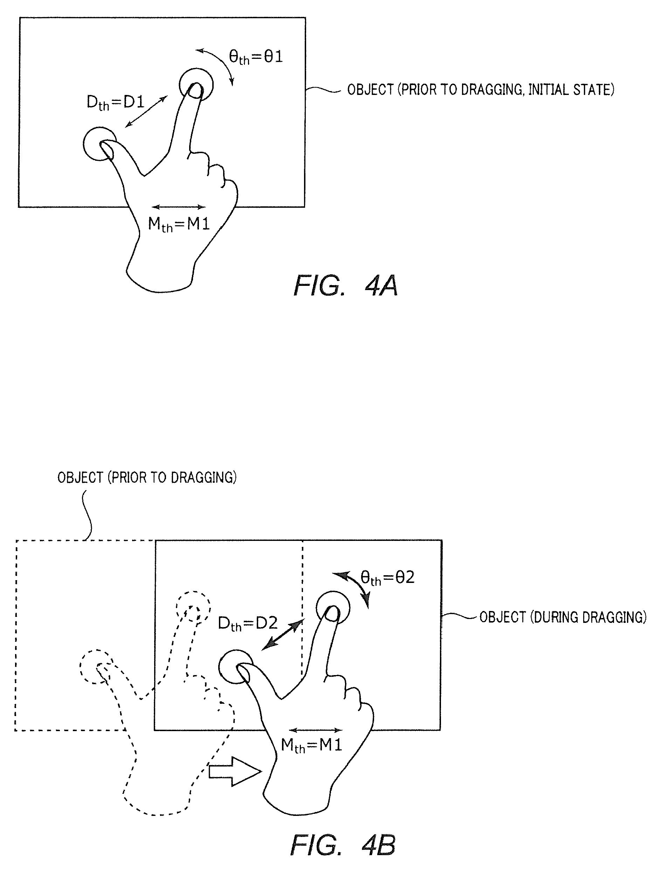

As illustrated in FIG. 4A, in an initial state where no gesture operation is performed, threshold value Mₜₕ of dragging is set to "M1," threshold value Dₜₕ of resizing is set to "D1," and threshold value θₜₕ of the rotating is set to "θ1." When two touch points are moved in parallel with each other in a lateral direction at a sliding speed greater than threshold value Mₜₕ (=M1) for example, the dragging is valid. On the screen of display section 13, the object is drug in accordance with the amount of the sliding performed after the start of the gesture operation. When no gesture operation is executed, the threshold values of the determination indices of all of the gesture operations are set to the first threshold value, and therefore the gesture operation is smoothly started even when the operation speed is not intentionally increased.

As illustrated in FIG. 4B, during dragging of an object, threshold value Mₜₕ of the determination index of dragging (sliding speed) is held at "M1," threshold value Dₜₕ of the determination index of resizing (point distance change speed) is set to "D2" which is greater than D1, and threshold value θₜₕ of the determination index of rotating (rotating speed) is set to "θ2" which is greater than θ1. In FIG. 4A and FIG. 4B, the value of the threshold value is indicated by the thickness of the arrow, and the thin arrow and the thick arrow correspond to the first threshold value and the second threshold value, respectively.

As described, when any of a plurality of gesture operations (here, dragging, resizing, and rotating) is valid, threshold value setting section 11 D sets the threshold value of the determination index of a gesture operation (second gesture operation) other than the valid gesture operation (first gesture operation) to a value greater than the initial threshold value.

With this configuration, during dragging of an object (see FIG. 4B), resizing and rotating do not easily become valid in comparison with the initial state (see FIG. 4A). That is, only when a gesture operation is executed by intentionally increasing the point distance change speed or the rotating speed during dragging of an object, resizing or rotating is executed. For example, when a distance between points is changed or a rotation operation is performed at a relatively high speed, or when an operation of gradually increasing a distance between points is performed at a low speed in the case where the user is dragging an object with two fingers, resizing or rotating is not performed, and dragging is continued with the original size and angle position. In this manner, the discrimination accuracy of the gesture operation is remarkably improved, and thus reflection of unintended gesture operation on the screen can be prevented.

It is to be noted that the setting of the threshold value of the determination index of the second gesture operation is not limited to the above-described method. For example, threshold value setting section 11D may variably set the threshold value of the determination index of the other gesture operations (second gesture operation) in accordance with the measured value of the determination index of the valid gesture operation (first gesture operation). That is, the threshold value may be set such that the greater the operation speed of the first gesture operation (or the greater the difference between the threshold value and the measured value of the determination index), the greater the threshold value of the determination index of the second gesture operation. With this configuration, in the case where error of the gesture operation increases as the operation speed increases, reflection of an unintended gesture operation on the screen can be effectively prevented.

In this case, the setting table of the threshold value is provided as Table 2 for example. According to Table 2, the threshold value of the determination index of the second gesture operation is set to the second threshold value which is greater than the first threshold value when the operation speed of the first gesture operation is low, whereas the threshold value of the determination index of the second gesture operation is set to a third threshold value which is greater than the second threshold value when the operation speed of the first gesture operation is high.

In Table 2, in the case where a plurality of first gesture operations are performed, the threshold value of the determination index of the second gesture operation is determined based on respective first gesture operations, and a threshold value having a larger value is employed. For example, when point distance change speed Dₘ is low and rotating speed θₘ is high ("J2-1, J3-2" in Table 2) in the case where resizing and rotating are valid, threshold value Mₜₕ of the determination index of dragging as the second gesture operation is set to "M3" on the basis of rotating speed Dₘ.

**[Table 2]**

| | | Valid gesture operation | | | | | | | | | |
|---|---|---|---|---|---|---|---|---|---|---|---|
| | | None | J3-1 | J3-2 | J2-1 | J2-1 J3-1 | J2-1 J3-2 | J2-2 | J2-2 J3-1 | ... | J1-2 J2-2 |
| Threshold value | Mₜₕ | M1 | M2 | M3 | M2 | M2 | M3 | M3 | M3 | ... | M1 |
| | Dₜₕ | D1 | D2 | D3 | D1 | D1 | D1 | D1 | D1 | ... | D1 |
| | θₜₕ | θ1 | θ1 | θ1 | θ2 | θ1 | θ1 | θ3 | θ1 | ... | θ3 |

| | | | | | | | | | | | |
|---|---|---|---|---|---|---|---|---|---|---|---|
| J1-1: dragging (low speed) J1-2 dragging (high speed) J2-1: resizing (low speed) J2-2: resizing (high speed) J3-1: rotating (low speed) J3-2: rotating (high speed) M1, D1, θ1: first threshold value M2, D2, θ2: second threshold value (>first threshold value) M3, D3, θ3: third threshold value (>second threshold value) | | | | | | | | | | | |

Note) To avoid complication of Table 2, J1-1 is omitted in Table 2

In addition, for example, in the case where a plurality of first gesture operations are performed, threshold value setting section 11 D may convert the execution state of the gesture operations into numerical values on the basis of the measured values of the determination indices of the first gesture operations or the number of (one or a plurality of) the first gesture operations to set the threshold value of the determination index of the second gesture operation in accordance with the numerical values. With this configuration, in the case where error of the gesture operation increases along with simultaneous execution of a plurality of gesture operations, reflection of an unintended gesture operation on the screen can be effectively prevented.

For example, one point is given when a plurality of first gesture operations are performed. Further, one point is given when the operation speed is low in each first gesture operation, whereas two points are given when the operation speed is high in each first gesture operation. Then, the points thus given are added up to convert the execution state of the currently performed gesture operation into a numerical value.

In this case, the setting table of the threshold value is provided as Table 3. The numbers in parentheses in Table 3 are numerical values which indicate the execution state of the currently performed gesture operation. As shown in Table 3, when the numerical value which indicates the execution state of the gesture operation is one point, the threshold value of the determination index of the second gesture operation is set to the second threshold value. Likewise, when the numerical value which indicates the execution state of the gesture operation is 2 to 5 points, the threshold value of the determination index of the second gesture operation is set to the third to sixth threshold values, respectively.

**[Table 3]**

| | | Valid gesture operation | | | | | | | | | |
|---|---|---|---|---|---|---|---|---|---|---|---|
| | | None (0) | J3-1 (1) | J3-2 (2) | J2-1 (1) | J2-1 J3-1 (3) | J2-1 J3-2 (4) | J2-2 (2) | J2-2 J3-1 (4) | ... | J1-2 J2-2 (5) |
| Threshold value | Mₜₕ | M1 | M2 | M3 | M2 | M4 | M5 | M3 | M5 | ... | M1 |
| | Dₜₕ | D1 | D2 | D3 | D1 | D1 | D1 | D1 | D1 | ... | D1 |
| | θₜₕ | θ1 | θ1 | θ1 | θ2 | θ1 | θ1 | θ3 | θ1 | ... | θ6 |

| | | | | | | | | | | | |
|---|---|---|---|---|---|---|---|---|---|---|---|
| J1-1: dragging (low speed) J1-2: dragging (high speed) J2-1: resizing (low speed) J2-2: resizing (high speed) J3-1: rotating (low speed) J3-2: rotating (high speed) M1, D 1, θ1: first threshold value M2, D2, θ2: second threshold value (>first threshold value) M3, D3, θ3: third threshold value (>second threshold value) M4, D4, θ4: fourth threshold value (>third threshold value) M5, D5, θ5: fifth threshold value (>fourth threshold value) M6, D6, θ6: sixth threshold value (>fifth threshold value) | | | | | | | | | | | |

Note) To avoid complication of Table 3, J1-1, D4, θ4, D5, θ5, M6, and D6 are omitted in Table 3

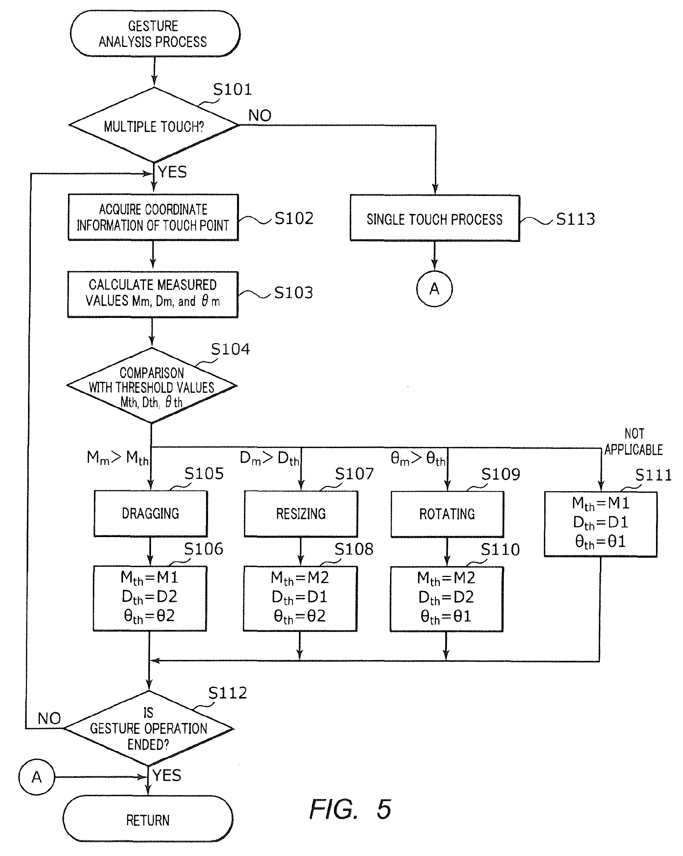

FIG. 5 is a flowchart of an exemplary gesture analysis process executed by control section 11. This process is achieved when CPU 111 reads out and executes an information processing program stored in ROM 112 in response to turning on of the power of electronic whiteboard 10, execution of the main flow not illustrated, and detection of a gesture operation in the main flow, for example.

Here, it is assumed that the setting table shown in Table 1 is referred to at the time of setting the threshold value of the determination index of a multiple touch gesture. Accordingly, in the initial state, the threshold value Mₜₕ of the determination index of dragging is set to "M1," the threshold value Dₜₕ of the determination index of resizing is set to "D1," and the threshold value of the determination index of rotating is set to "θ1."

At step S101, control section 11 determines whether an operation of touching two points in a region of an object (hereinafter referred to as "multiple touch") is performed via operation receiver 12. When it is determined that a multiple touch is performed ("YES" at step S101), the process is advanced to step S102.

On the other hand, when it is determined that an operation of touching only one point in an object region (hereinafter referred to as "single touch") is performed ("NO" at step S101), the process is advanced to step S113. At step S113, a process (for example, object selection, cancellation of object selection, object movement or the like) corresponding to a single touch is executed. It is to be noted that, when it is determined that the touch operation is completed in the process corresponding to a single touch, the process is returned to the main flow. In addition, when the touch operation is changed from the single touch to the multiple touch, the process is advanced to step S102.

At step S102, control section 11 acquires the coordinate information of the touch point at a predetermined time (unit time) interval. The acquired coordinate information is sequentially stored in RAM 113 until the contacting of the user on operation receiver 12 is canceled, for example.

At step S103, control section 11 calculates measured values Mₘ, Dₘ, and θₘ of the determination indices of dragging, resizing, and rotating (sliding speed, point distance change speed, and rotating speed) on the basis of the change of the coordinate of the touch point (a process performed as gesture analysis section 11E). The measured value of the determination index of the gesture operation which is not intended by the user is substantially "0."

At step S104, control section 11 compares the threshold values Mₜₕ, Dₜₕ, and θₜₕ of the determination indices of dragging, resizing, and rotating with measured values Mₘ, Dₘ, and θₘ obtained at step S103 (a process performed as gesture analysis section 11E). When all of the gesture operations are not executed, threshold values M1, D1 and θ1 and measured values Mₘ, Dₘ, and θₘ are compared with each other, whereas when any of the gesture operations is executed, threshold value M1 or M2, D1 or D2, and θ1 or θ2 and measured values Mₘ, Dₘ, and θₘ are compared with each other.

At step S104, when it is determined that measured value Mₘ of the sliding speed is greater than threshold value Mₜₕ, the process is advanced to step S105. At step S105, control section 11 sets dragging as a valid gesture operation (a process performed as gesture analysis section 11E). On the screen of display section 13, dragging of the object is performed in accordance with the sliding amount (a process performed as display control section 11 C). In addition, at step S106, control section 11 sets threshold value Mₜₕ of the sliding speed to "M1," and sets threshold values Dₜₕ and θₜₕ of the point distance change speed and the rotating speed to "D2" and "θ2," respectively (a process performed as threshold value setting section 11D).

At step S104, when it is determined that measured value Dₘ of the point distance change speed is greater than threshold value Dₜₕ, the process is advanced to step S107. At step S107, control section 11 sets resizing as a valid gesture operation (a process performed as gesture analysis section 11E). On the screen of display section 13, resizing of the object is performed in accordance with the point distance change amount (a process performed as display control section 11C). In addition, at step S108, control section 11 sets threshold value Dₜₕ of the point distance change speed to "D1," and sets threshold values Mₜₕ and θₜₕ of the sliding speed and the rotating speed to "M2" and "θ2," respectively (a process performed as threshold value setting section 11D).

At step S104, when it is determined that measured value θₘ of the rotating speed is greater than threshold value θₜₕ, the process is advanced to step S109. At step S109, control section 11 sets rotating as a valid gesture operation (a process performed as gesture analysis section 11E). On the screen of display section 13, rotating of the object is performed in accordance with the rotating amount (a process performed as display control section 11 C). In addition, at step S110, control section 11 sets threshold value θₜₕ of the rotating speed to "θ1," and sets threshold value Mₜₕ and Dₜₕ of the sliding speed and the point distance change speed to "M2" and "D2," respectively (a process performed as threshold value setting section 11D).

At step S104, when the operation speed has a very small value and all of the gesture operations are determined to be invalid, the process is advanced to step S111. At step S111, control section 11 resets threshold values Mₜₕ, Dₜₕ and θₜₕ of the sliding speed, the point distance change speed, and the rotating speed to the initial value (a process performed as threshold value setting section 11D).

Not only when the touch point is not changed from the initial state, but also when the valid gesture operation is completed, the measured value of the determination index decreases to a value equal to or smaller than the threshold value, and therefore the process of step S111 is executed. That is, when the valid gesture operation is completed, all of threshold values Mₜₕ, Dₜₕ and θₜₕ of the sliding speed, the point distance change speed, and the rotating speed are reset to the initial value at step S111. Therefore, when different gesture operations are continuously performed (for example, when resizing is performed after dragging), it is possible to prevent a situation where the next gesture operation does not easily become valid, and thus, the gesture operation is smoothly reflected on the screen.

It is to be noted that, when a plurality of multiple touch gestures become valid in the comparison process at step S104, the threshold value of the determination index of the valid gesture operation is set to the first threshold value, and only the threshold value of the determination index of the invalid gesture operation is set to the second threshold value as shown in Table 1 (a process performed as threshold value setting section 11D).

For example, when measured value Dₘ of the point distance change speed exceeds threshold value Dₜₕ (=D2) during dragging of an object (threshold value: Mₜₕ=M1, Dₜₕ=D2, θₜₕ=θ2), the resizing is also set as a valid gesture operation. In this case, threshold value Dₜₕ of the point distance change speed is changed to first threshold value "D1," and only threshold value θₜₕ of the rotating speed is held at the second threshold value "θ2."

At step S112, control section 11 determines whether the multiple touch gesture is completed. To be more specific, when the finger is detached from operation receiver 12 and the multiple touch is not detected, control section 11 determines that the multiple touch gesture is completed. When the multiple touch gesture is completed ("YES" at step S112), the process is returned to the main flow. When the multiple touch gesture is not completed ("NO" at step S112), the process is advanced to step S102. It is to be noted that, when the touch operation is changed from the multiple touch to the single touch, the process is advanced to step S 113.

According to the flowchart of FIG. 5, during a period in which dragging of an object is performed, threshold values Dₜₕ and θₜₕ of the point distance change speed and the rotating speed are set to second threshold values D2 and θ2 which are greater than first threshold value D1 and θ1, and therefore resizing and rotating are not easily determined to be a valid gesture operation in the comparison process at subsequent step S104. That is, when the distance between the points or the rotating speed is merely slightly changed during dragging of an object, the resizing or rotating is not determined to be a valid gesture operation.

In addition, during a period in which resizing of an object is performed, threshold values Mₜₕ and θₜₕ of the sliding speed and the rotating speed are set to second threshold values M2 and θ2 which are greater than first threshold values M1 and θ1, and therefore dragging and rotating are not easily determined to be a valid gesture operation in the comparison at subsequent step S104. That is, when the sliding speed or the rotating speed is merely slightly changed during the resizing of an object, the dragging or rotating is not determined to be a valid gesture operation.

Likewise, during a period in which rotating of an object is performed, threshold values Mₜₕ and Dₜₕ of the sliding speed and the point distance change speed are set to second threshold values M2 and D2 which are greater than first threshold values M1 and D1, and therefore dragging and resizing are not easily determined to be a valid gesture operation in the comparison at subsequent step S104. That is, when the sliding speed or the point distance change speed is merely slightly changed during rotting of an object, the dragging or the resizing is not determined to a valid gesture operation.

As described, electronic whiteboard 10 described as an example of the information processing device includes operation receiver 12 capable of receiving a plurality of gesture operations (drag, resizing, and rotation); threshold value setting section 11 D configured to set threshold values Mₜₕ, Dₜₕ and θₜₕ of determination indices (sliding speed, point distance change speed, and rotating speed) for determining whether the gesture operation is valid for each of the gesture operations; gesture analysis section 11E configured to calculate a measured value of the determination indices Mₘ, Dₘ, and θₘ of a gesture operation performed on the operation receiver 12 and compare the measured values Mₘ, Dₘ, and θₘ with the threshold values Mₜₕ, Dₜₕ and θₜₕ to determine whether the gesture operation is valid; and display control section 11C configured to reflect the valid gesture operation determined on the screen. Threshold value setting section 11 D variably sets a threshold value corresponding to a gesture operation other than the valid gesture operation determined in accordance with an execution state of the gesture operation performed on the operation receiver.

According to electronic whiteboard 10, the threshold value of the determination index for determining whether the gesture operation is valid is appropriately set in accordance with the execution state of the gesture operation, and therefore it is possible to prevent a situation where a gesture operation which is not intended by the user is reflected on the screen prevent due to error of the gesture operation and the like, and only the gesture operation intended by the user can be surely reflected on the screen. Accordingly, the operability at the time of information input using a gesture operation is remarkably improved.

While the invention made by the present inventor has been specifically described based on the preferred embodiments, it is not intended to limit the present invention to the above-mentioned preferred embodiments but the present invention may be further modified within the scope and spirit of the invention defined by the appended claims.

For example, the present invention is applicable not only to the case where a multiple touch gesture such as dragging, resizing, and rotating is executed, but also to a case where a single touch gesture is executed, or more specifically, a case where the display region is moved in four directions by a plurality of scroll operations in different sliding directions (vertical scrolling and horizontal scrolling) for example. In this case, the sliding speed in each sliding direction is the determination index of the gesture operation.

For example, in the case where no gesture operation is executed, the threshold value of the sliding speed of the vertical scrolling and the threshold value of the sliding speed of the horizontal scrolling are set to the first threshold value. When the user executes the vertical scrolling and the sliding speed exceeds the threshold value, the threshold value of the sliding speed of the horizontal scrolling is set to the second threshold value. Accordingly, even when the sliding direction is shifted in the lateral direction to a certain degree during the vertical scrolling, only the vertical scrolling is reflected on the screen. It is to be noted that, when both the sliding speed of the vertical scrolling and the sliding speed of the horizontal scrolling exceed the threshold value, the scrolling in an oblique direction is executed.

In addition, while the operation speed is used as the determination index of the gesture operation in the above-described embodiment, the operation amount may be used as the determination index of the gesture operation. In addition, both the operation speed and the operation amount may be used for the determination index of the gesture operation.

In addition, while the threshold value is set to stepwise values when the threshold value is variably set in the above-mentioned embodiment, the present invention is not limited to this, and the threshold value may be continuously changed in accordance with the measured value of the determination index based on a calculation formula in which the threshold value is expressed as a function of the measured value of the determination index.

While electronic whiteboard 10 executes an information processing program to achieve the above-described information process in the embodiment, the information process may also be achieved with use of a hardware circuit. The information processing program may be stored in a computer-readable storage medium such as a magnetic disc, an optical disk, and a flash memory so as to be provided to an apparatus (for example, a personal computer) which can be used as the conference support apparatus. Alternatively, the information processing program may be provided by downloading through communication lines such as the Internet.

The information processing device according to the embodiment of the present invention may be applicable to information processing devices (for example, a smartphone, a tablet terminal, a notebook computer and the like) having an operation receiver such as a touch panel and a touch pad which can receive a gesture operation, as well as the above-mentioned electronic whiteboard.

The embodiment disclosed herein is merely an exemplification and should not be considered as limitative. The scope of the present invention is specified by the following claims, not by the above-mentioned description. It should be understood that various modifications, combinations, sub-combinations and alterations may occur depending on design requirements and other factors in so far as they are within the scope of the appended claims or the equivalents thereof. Although embodiments of the present invention has been described and illustrated in detail, it is clearly understood that the same is by way of illustrated and example only and is not to be taken by way of limitation, the scope of the present invention being interpreted by terms of the appended claims.

## Claims

1. An information processing device (10) comprising:
an operation receiver (12) capable of receiving a plurality of gesture operations and generating an output according to each of the gesture operations;
a threshold value setting section (11D) configured to set a threshold value of a determination index for determining whether the gesture operation is valid for each of the gesture operations;
a gesture analysis section (11E) configured to provide a measured value of the determination index of a gesture operation received by the operation receiver and compare the measured value with the threshold value to determine whether the gesture operation is valid; and
a display control section (11C) configured to reflect the valid gesture operation on the screen, wherein
the threshold value setting section variably sets a threshold value corresponding to a gesture operation other than the valid gesture operation in accordance with an execution state of the gesture operation received by the operation receiver.

2. The information processing device according to claim 1, wherein, when any of the gesture operations is a valid gesture operation, the threshold value setting section sets a threshold value of a determination index of a second gesture operation other than a first gesture operation which is the valid gesture operation to a value greater than an initial threshold value.

3. The information processing device according to claim 2, wherein the threshold value setting section sets the threshold value of the determination index of the second gesture operation in accordance with a measured value of a determination index of the first gesture operation.

4. The information processing device according to claim 3, wherein, when a plurality of the first gesture operations are received, the threshold value setting section converts the execution state of the gesture operation received by the operation receiver into a numerical value on a basis of a measured value of a determination index of each of the first gesture operations or a number of the first gesture operations to set the threshold value of the determination index of the second gesture operation in accordance with the numerical value.

5. The information processing device according to any one of claims 1 to 4, wherein the gesture operations include two or more of an operation of dragging an object, an operation of resizing an object, and an operation of rotating an object.

6. The information processing device according to any one of claims 1 to 5, wherein the gesture operations include a plurality of scrolling operations in sliding directions different from each other.

7. The information processing device according to any one of claims 1 to 6, wherein the display control section also reflects an operation performed in a period from a start of the gesture operation until the gesture operation becomes valid.

8. The information processing device according to any one of claims 1 to 7, wherein the operation receiver comprises a flat panel display provided with a touch panel.

9. An information processing program for causing a computer of an information processing device including an operation receiver capable of receiving a plurality of gesture operations and generating an output according to each of the gesture operations, said information processing program causing the computer to execute:
setting a threshold value of a determination index for determining whether the gesture operation is valid for each of the gesture operations;
providing a measured value of the determination index of a gesture operation received by the operation receiver and comparing the measured value with the threshold value to determine whether the gesture operation is valid;
reflecting the valid gesture operation on a screen; and
variably setting a threshold value corresponding to a gesture operation other than the valid gesture operation in accordance with an execution state of the gesture operation received by the operation receiver.

10. The information processing program according to claim 9, wherein, when any of the gesture operations is a valid gesture operation, a threshold value of a determination index of a second gesture operation other than a first gesture operation which is the valid gesture operation is set to a value greater than an initial threshold value.

11. The information processing program according to claim 10, wherein the threshold value of the determination index of the second gesture operation is set in accordance with a measured value of a determination index of the first gesture operation.

12. The information processing program according to any one of claims 9 to 11, wherein the gesture operations include two or more of an operation of dragging an object, an operation of resizing an object, and an operation of rotating an object.

13. The information processing program according to any one of claims 9 to 12, wherein the gesture operations include a plurality of scrolling operations in sliding directions different from each other.

14. The information processing program according to any one of claims 9 to 13, wherein an operation performed in a period from a start of the gesture operation until the gesture operation becomes valid is also reflected.

15. An information processing method in an information processing device including an operation receiver capable of receiving a plurality of gesture operations and generating an output according to each of the gesture operations, the method comprising:
setting a threshold value of a determination index for determining whether the gesture operation is valid for each of the gesture operations;
providing a measured value of the determination index of a gesture operation received by the operation receiver and comparing the measured value with the threshold value to determine whether the gesture operation is valid;
reflecting the valid gesture operation on a screen; and
variably setting a threshold value corresponding to a gesture operation other than the valid gesture operation in accordance with an execution state of the gesture operation received by the operation receiver.
